# EUROPEAN PATENT SPECIFICATION

(11) **EP 3 354 132 B1**
(45) Date of publication and mention of the grant of the patent: **18.05.2022**
(21) Application number: 16848818.7
(22) Date of filing: 30.08.2016
(51) Int. Cl.: A01M 1/08, A01M 1/04, A01M 1/10, F21V 19/00, F21V 23/00, F21V 17/10, F21K 99/00, F21V 33/00

(54) **INSECT TRAP**
INSEKTENFALLE
PIÈGE À INSECTES

(30) Priority: 25.09.2015 KR 20150136762
(43) Date of publication of application: 01.08.2018
(73) Proprietor: Seoul Viosys Co. Ltd., Ansan-si, Gyeonggi-do 15429 (KR)
(72) Inventor: LEE, Chung Hoon, Ansan-si Gyeonggi-do 15429 (KR); HAN, Kyu Won, Ansan-si Gyeonggi-do 15429 (KR); CHANG, Sang Hyun, Ansan-si Gyeonggi-do 15429 (KR)
(74) Representative: Isarpatent
(86) International application number: PCT/KR2016/009650
(87) International publication number: WO 2017/052092

(56) References cited:
- EP-A1- 2 587 115
- JP-A- 2008 117 772
- JP-A- 2009 043 447
- JP-A- 2012 015 012
- KR-A- 20090 009 373
- KR-A- 20090 009 373
- KR-A- 20120 078 220
- TW-U- M 333 509
- US-A1- 2008 106 900
- US-A1- 2014 137 462

## Description

### [Technical Field]

The present invention relates to an insect trap, and, more particularly to an insect trap used to attract and trap insects.

### [Background Art]

Recently, the population of insect pests has been increasing due to climatic and social influences such as global warming and eco-friendly policies. In addition to damaging crops and livestock, insect pests can also affect humans by transmitting pathogens such as malaria, dengue fever, and Japanese encephalitis. Therefore, there is continuous demand for deinsectization of the surrounding living environment, and accordingly, deinsectization-related industries are also growing.

Conventionally, there have been proposed chemical control using pesticides, biological control using loaches or the like, physical control that attracts insect pests using a black light trap, carbon dioxide, or the like, followed by application of high voltage to kill the insect pests, and environmental control that improves the surrounding environment by eliminating water puddles in which larvae of insects can grow.

However, chemical control has a problem of secondary pollution, and biological control or environmental control has a problem of high cost and much time and effort. In addition, physical control using an insect trap or the like has a problem in that device configuration is complicated, causing deterioration in ease of use, desired trapping efficacy cannot be secured, and device cost is relatively high.

UV light sources have been used for medical purposes such as sterilization, disinfection and the like, analytical purposes, such as analysis based on changes in radiated UV light, industrial purposes such as UV curing, cosmetic purposes such as UV tanning, and other purposes such as insect trapping, counterfeit money discrimination, and the like.

Examples of a typical UV lamp used as such UV light sources include mercury lamps, excimer lamps, and deuterium lamps. However, such typical UV lamps all have problems of high power consumption and heat generation, short lifespan, and environmental pollution due to toxic gases used in the lamps.

As an alternative to overcome the above-described problems of typical UV lamps, UV LEDs have attracted attention. UV LEDs are advantageous in that the UV LEDs have low power consumption and cause no environmental pollution. However, the production cost of LED packages that emit light in the UV range is considerably higher than the production cost of LED packages that emit light in the visible range, and various products using UV LED packages have not been developed since the characteristics of UV light are quite different from the characteristics of light in the visible range.

In addition, there are limits in replacement of typical UV lamps with UV LEDs due to difference in light-emission characteristics therebetween.

A typical UV lamp provides surface emission and radiates light in all directions, whereas a UV LED provides spot emission and radiates light in one direction. Thus, depending upon application, it is necessary to take into account the difference between a UV lamp and a UV LED when replacing the UV lamp with the UV LED. For example, a UV light source used in an insect trap is configured to radiate UV light a full 360 degrees around the insect trap and thus needs to be designed to meet this requirement. US 2014/137462 A1 relates to a device for trapping insects includes a UV LED, a cover and a trap or cage that are disposed at opposite ends of a housing. KR 2009 0009373 A relates to a decoy device comprisin an ultra-violet ray lamp which is inserted in a socket;

### [Disclosure]

### [Technical Problem]

Exemplary embodiments of the present invention provide an insect trap which uses a UV LED lamp instead of a typical UV lamp, thereby exhibiting high insect trapping efficacy.

### [Technical Solution]

The invention is defined by the appended claims. In accordance one aspect of the present invention, an insect trap includes: a main body formed with an opening exposing an inside thereof; a UV LED lamp including a UV LED, a substrate on which the UV LED is mounted, a base having an accommodation space formed therein to receive the substrate, and a pair of electrode pins protruding from the base to be electrically connected to the substrate, the pair of electrode pins being arranged in a UV emitting direction of the UV LED lamp; a mounting unit including a mounting plate placed inside the main body and a socket coupled to the mounting plate and securing the electrode pins to the mounting plate such that the UV LED lamp is placed inside the main body; and a trapping unit provided to the main body to be adjacent to the UV LED lamp, wherein the electrode pins are inserted into the socket in an insertion state and secured to the socket by rotating the UV LED lamp in one direction or in the opposite direction to shift the electrode pins to a connection state, and the UV LED lamp having the electrode pins secured to the socket is placed inside the main body such that the UV emitting direction of the UV LED lamp is fixed toward the opening.

The socket includes: a first socket body coupled to the mounting plate and having an insertion space therein; an insertion portion formed through the first socket body to form a passage allowing the electrode pins in the insertion state to be inserted into the insertion space; a pair of socket electrodes contacting the electrode pins shifted to the connection state in the insertion space to be electrically connected to the UV LED lamp; and a second socket body coupled to the first socket body and securing the pair of socket electrodes in the insertion space.

Each of the socket electrodes includes a first electrode portion provided to the second socket body and a second electrode portion extending from the first electrode portion to form a V-shape together with the first electrode portion and disposed at a location at which contact with the electrode pin can be achieved, and the first electrode portion and the second electrode portion are connected to each other to be resiliently deformable in the direction of changing a gap therebetween.

Preferably, the second electrode portion is formed with a recessed seat portion contacting the electrode pin shifted to the connection state, and the socket electrode pushes the electrode pin by resilient force acting in the direction of increasing the gap between the first electrode portion and the second electrode portion to secure the electrode pin shifted to the connection state.

The second socket body is formed with a recessed electrode mounting portion into which the socket electrode is detachably fitted, and the socket electrode is deformed in the direction of decreasing the gap between the first electrode portion and the second electrode portion to be inserted into the electrode mounting portion, and is brought into close contact with an inner wall of the electrode mounting portion by resilient force acting in the direction of increasing the gap between the first electrode portion and the second electrode portion.

Preferably, the insect trap further includes a wire connecting the socket to a power source, wherein the second socket body is formed therethrough with a wire passage hole which forms a passage allowing the wire to be inserted into the electrode mounting portion through the second socket body.

Preferably, the socket electrode further includes a third electrode portion protruding from the second electrode portion towards the first electrode portion, the second electrode portion and the third electrode portion are connected to each other to be resiliently deformable in the direction of changing a gap between the third electrode portion and the first electrode portion, and the third electrode portion pushes the wire inserted between the first electrode portion and the third electrode portion toward the first electrode portion to secure the wire between the first electrode portion and the third electrode portion.

Preferably, the socket further includes a rotary opening/closing member rotatably provided to the first socket body to open/close the insertion portion through change of a rotation angle thereof.

Preferably, the rotary opening/closing member includes: a column extending in a longitudinal direction of the electrode pin and configured to be rotatable to an opening position allowing the insertion portion to be opened or to a closing position allowing the insertion portion to be closed in the insertion space; a first rotary coupling portion rotatably coupling one side of the column to a rear side of the first socket body; a second rotary coupling portion rotatably coupling the other side of the column to a front side of the first socket body; and an insertion hole formed through the column and the second rotary coupling portion in an insertion direction of the electrode pins to form a passage connected to the insertion portion when the rotary opening/closing member is in the opening position and to form a passage connected to the socket electrodes when the rotary opening/closing member is in the closing position.

Preferably, the first rotary coupling portion is formed on an outer peripheral surface thereof with a plurality of latch grooves in a rotational direction of the rotary opening/closing member, the second socket body further includes a latch hook configured to have resilient force in the direction of being pressed against the first rotary coupling portion to contact the outer peripheral surface of the first rotary coupling portion, and rotational location of the rotary opening/closing member is constrained by engagement between the latch hook and one of the latch grooves.

Preferably, the plurality of latch grooves is formed at a location at which engagement with the latch hook can be achieved when the rotary opening/closing member is in the opening position or in the closing position.

Preferably, the mounting plate has a mounting hole formed through a front surface and back surface thereof, and the socket is coupled to the mounting plate through the mounting hole from the back surface of the mounting plate.

Preferably, the first socket body includes: a back surface support portion protruding from the first socket body to be located outside the mounting hole and supporting the first socket body with respect to the back surface of the mounting plate; and a front surface support portion is located outside the mounting hole and protrudes from the first socket body such that a fitting space corresponding to a thickness of the mounting plate is formed between the front surface support portion and the back surface support portion.

Preferably, the front surface support portion is resiliently deformable in the direction of changing a degree of protrusion thereof in a transverse direction of the mounting hole.

Preferably, the UV LED lamp further includes: a first connection wire electrically connecting one of the pair of electrode pins to the surface of the substrate in the accommodation space; and a second connection wire electrically connecting the other electrode pin to the back surface of the substrate in the accommodation space.

Preferably, the pair of the electrode pins, in the insertion state, is arranged parallel to an extension direction of the insertion portion and, in the connection state, is arranged in a direction rotated by 90 degrees from the arrangement direction of the pair of electrode pins in the insertion state, and the UV LED faces the opening when the pair of the electrode pins is in the connection state.

### [Advantageous Effects]

In an insect trap according to the present invention, it is not necessary to take into account an insertion direction of a UV LED lamp into a socket, whereby placement of the UV LED lamp can be achieved in an easy and simple manner.

In addition, in the insect trap according to the present invention, a pair of electrode pins is separated from each other in a perpendicular direction with respect to a surface of a substrate, such that connection between the pair of electrode pins and the substrate can be achieved in different accommodation spaces divided by the substrate, thereby securing a sufficient space for connection of connection wires to the substrate, whereby a manufacturing process can be facilitated and time required for manufacture of products can be reduced.

Further, in the insect trap according to the present invention, the UV LED lamp is provided in the form of a finished product through assembly of a substrate, bases and a cover so as to make it unnecessary to perform operation of punching, accessory attachment or deformation with respect to the cover, and thus can provide improved illumination effects using the cover having high UV transmittance.

Moreover, the UV LED lamp can be easily assembled without separate post machining with respect to the cover and separate bonding with respect to each component, thereby reducing work time and costs for manufacture of products through improvement in assembly performance.

### [Description of Drawings]

FIG. 1 is a sectional view of an insect trap according to one embodiment of the present invention.
FIG. 2 is a sectional view taken along line II-II of FIG. 1.
FIG. 3 is a perspective view of a UV LED lamp shown in FIG. 2.
FIG. 4 is an exploded perspective view of the UV LED lamp shown in FIG. 3.
FIG. 5 is a cross-sectional view taken along line V-V of FIG. 3.
FIG. 6 is a partially enlarged sectional view of the UV LED lamp shown in FIG. 5.
FIG. 7 is a sectional view taken along line VII-VII of FIG. 3.
FIG. 8 is a sectional view of another example of coupling between a cover and a base shown in FIG. 7.
FIG. 9 is a sectional view of a UV LED lamp according to another embodiment of the present invention.
FIG. 10 is a partially enlarged sectional view of the UV LED lamp shown in FIG. 9.
FIG. 11 is a perspective view of a socket shown in FIG. 2.
FIG. 12 is an exploded perspective view of the socket shown in FIG. 11.
FIG. 13 is a sectional view of a coupling structure between the socket and electrode pins in an insertion state.
FIG. 14 is a sectional view of a coupling structure between the socket and the electrode pins shifted to a connection state.
FIG. 15 is a view of the UV LED lamp inserted into the socket.
FIG. 16 is a view of the UV LED lamp secured to the socket.

### [Best Mode]

Hereinafter, exemplary embodiments of the present invention will be described in detail with reference to the accompanying drawings. It should be understood that the drawings are not to precise scale and may be exaggerated in thickness of lines or size of components for descriptive convenience and clarity only. In addition, the terms used herein are defined by taking functions of the present invention into account and can be changed according to user or operator custom or intention. Therefore, definition of the terms should be made according to the overall disclosure set forth herein.

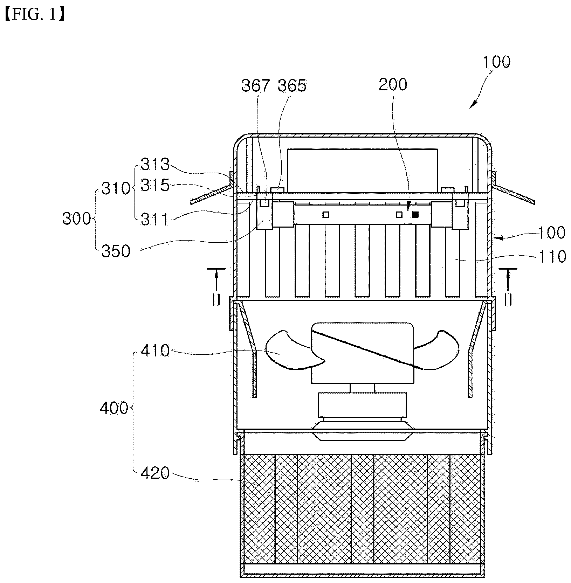

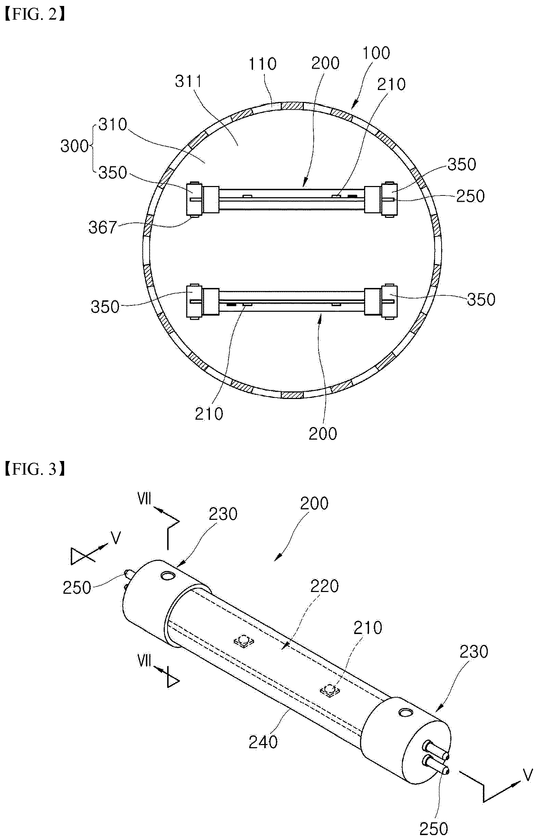

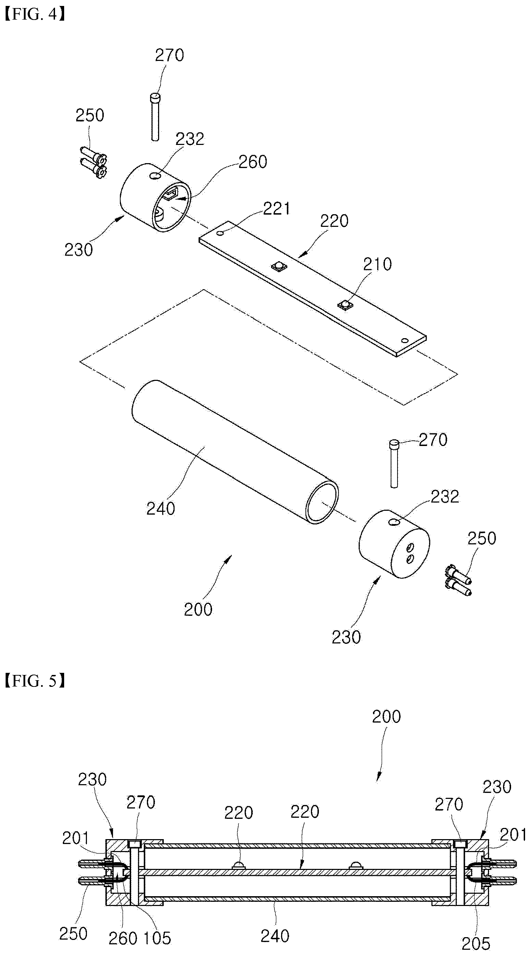

FIG. 1 is a sectional view of an insect trap according to one embodiment of the present invention and FIG. 2 is a sectional view taken along line II-II of FIG. 1. In addition, FIG. 3 is a perspective view of a UV LED lamp shown in FIG. 2 and FIG. 4 is an exploded perspective view of the UV LED lamp shown in FIG. 3.

Referring to FIG. 1 and FIG. 2, the insect trap 500 according to one embodiment of the present invention includes a main body 100, a UV LED lamp 200, a mounting unit 300, and a trapping unit 400.

The main body 100 has a hollow cylindrical shape. The main body 100 is open at a bottom thereof and is formed through a side thereof with an opening 110 exposing the inside of the main body. In addition, the main body 100 includes an enlarged portion formed at a lower end thereof such that an upper end of the trapping unit 400 described below is fitted into the enlarged portion.

The UV LED lamp 200 is secured to the mounting unit 300 described below to be placed inside the main body 100. The UV LED lamp 200 is disposed inside the main body 100 to emit UV light toward the opening 110 and includes a UV LED 210, a substrate 220, bases 230, and a cover 240, as shown in FIG. 3 and FIG. 4.

The UV LED 210 is configured to emit UV light. The UV light emitting diode 110 may be configured to emit UV light having a peak wavelength in the range of 340 nm to 400 nm, more specifically in the range of 360 nm to 370 nm.

Particularly, not only is UV light having a wavelength of 365 nm a powerful insect attractant, it also has high effects in decomposition of toxic substances, contaminants, or odors through promotion of catalytic reaction of a photocatalyst.

In this embodiment, the UV LED 210 is configured to emit UV light having a wavelength of 365 nm and the UV LED lamp 200 including the UV LED 210 may be used for attraction of insects and decomposition of toxic substances, contaminants or odors.

The substrate 220 is a structure for mounting the UV LED 210 thereon. The substrate 120 has a length determined in consideration of a region to be irradiated with UV light from the UV LED lamp 200.

The substrate 220 is provided in the form of a plate having a predetermined thickness and strength so as to prevent warpage due to the weight thereof and the weight of the UV LED 210, with only opposite ends of the substrate 220 supported.

According to this embodiment, a plurality of UV LEDs 210 is mounted on the substrate 220 to be arranged at certain intervals thereon.

On the substrate 220, the UV light emitting diode 210 may be mounted in the form of a surface-mountable metal can or a surface-mountable injection-molded lead frame package, may be mounted in a through-hole mounting manner, or may be mounted in a bare chip or flip-chip manner. Alternatively, the UV LED 210 may be provided to a sub-mount, which is used to improve heat dissipation or electrical characteristics.

The bases 230 are provided to the opposite ends of the substrate 220 in the longitudinal direction, respectively. Each of the bases 230 has an accommodation space formed therein and receiving the substrate 220, specifically, one end of the substrate 220.

Each of the bases 230 is provided with electrode pins 250 electrically connected to the substrate 220.

The electrode pins 250 are electrically connected to a socket 350 (see FIG. 2), on which the UV LED lamp 200 will be mounted, to receive electric power from a power source. The electrode pins 250 serve as media which supply electric power supplied from a power source to the substrate 220 and the UV LED 210 mounted thereon through connection wires 201, 205 described below. Details of the electrode pins 250 will be described below.

The cover 240 is disposed to surround the UV LED 210 and the substrate 220. The cover 240 is coupled to the bases 230 by press-fitting both ends of the cover 240 into the bases 230, respectively.

According to this embodiment, the cover 240 may be formed of a material exhibiting high UV light transmittance, for example, at least one of a poly(methyl methacrylate) (PMMA) resin having a high monomer content and quartz. In addition, the cover 240 may be formed of a flexible material having high UV light transmittance.

Since the cover 240 formed of such a material exhibits high UV light transmittance to allow UV light emitted from the UV LED 210 to pass therethrough in a high ratio, the cover 240 can protect the UV LED 210 and the substrate 220 from impact and contaminants while improving illumination effects using UV light.

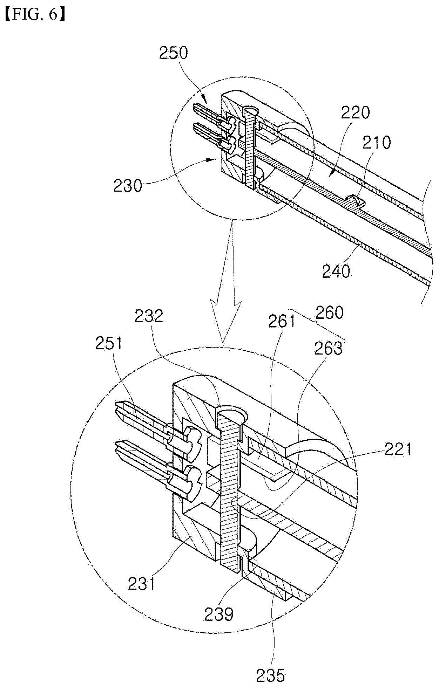

FIG. 5 is a sectional view taken along line "V-V" of FIG. 3 and FIG. 6 is a partially enlarged sectional view of the UV LED lamp shown in FIG. 5.

Referring to FIG. 5 and FIG. 6, each of the bases 230 is divided into an electrode pin mounting portion 231 to which the electrode pins 250 are coupled, and a cover mounting portion 235 to which the cover 240 is coupled.

The cover mounting portion 235 has a greater inner diameter than the electrode pin mounting portion 231 and steps 239 are formed between the electrode pin mounting portion 231 and the cover mounting portion 235.

The cover 240 is press-fitted into the bases 230 after being inserted into the cover mounting portion 235, and a coupling location between each of the bases 230 and the cover 240 can be guided by interference between the ends of the cover 240 and the steps 239.

That is, coupling between the cover 240 and the bases 230 can be completed simply by inserting the cover 240 into the bases 230 disposed at opposite sides of the cover 240.

Each of the bases 230 is provided with support guides 260. The support guides 260 are fitted into the substrate 220 and support the substrate 220 with respect to the base 230 so as to restrict movement of the substrate 220.

According to this embodiment, each of the support guides 260 includes a rib 261 and a coupling recess 263.

The rib 261 protrudes into the base 230 having the accommodation space formed therein, specifically, into the electrode pin mounting portion 231. The rib 261 protrudes parallel to the transverse direction of the substrate 220 and a pair of ribs 261 is disposed to face each other in each of the bases 230 in the protruding direction thereof.

In this embodiment, the pair of ribs 261 is illustrated as being arranged orthogonal to an arrangement direction of the electrode pins 250.

The coupling recess 263 is formed in each of the ribs 261. One end of the substrate 220 is slidably inserted into the coupling recess 163 and interference coupling between the substrate 220 and each of the support guides 260 can be achieved through insertion of the substrate 220 into the coupling recess.

By such interference coupling between the substrate 220 and the support guides 260, the substrate 220 can be supported by the bases 230 such that movement of the substrate 220 can be restricted in the thickness direction (hereinafter, "vertical direction") thereof.

According to this embodiment, the UV LED lamp 200 may further include a fastening member 270, which passes through the base 230 to be coupled to the base 230 so as to secure the substrate 220 to the base 230.

A guide hole 232 is formed through the base 230 to allow the fastening member 270 to pass therethrough when penetrating the base 230, and a fastening hole 221 is formed through the substrate 220 to allow the fastening member 270 to pass therethrough when penetrating the base 230 through the guide hole 232.

The guide hole 232 and the fastening hole 221 are formed through the base and the substrate in a penetrating direction of the fastening member 270 passing through the base 230, for example, in the thickness direction of the substrate 220, respectively.

The fastening member 270 is coupled to the base 230 through coupling to the guide hole 232 and is coupled to the substrate 220 through coupling to the fastening hole 221, thereby securing the substrate 220 to the base 230.

In this way, the fastening member 270 secures the substrate 220 to the base 230 such that movement of the substrate 220 can be restricted in a direction different from the direction in which movement of the substrate 220 is restricted by the support guides 260.

For example, when the support guides 260 secure the substrate 220 to the base 230 so as to restrict vertical movement of the substrate 220, the fastening member 270 may secure the substrate 220 to the base 230 so as to restrict movement of the substrate 220 in the longitudinal direction (hereinafter, "horizontal direction") thereof.

In addition, the support guides 260 may secure the substrate 220 to the base 230 so as to restrict movement of the substrate 220 in the width direction (hereinafter, "transverse direction") thereof by adjusting a gap between the support guides 160 into which the substrate 220 is inserted.

The electrode pins 250 are provided to the electrode pin mounting portion 231 of the base 230 and pass through one side of the base 230 in the longitudinal direction such that one side of each of the electrode pins 250 is exposed to the accommodation space of the base 230 and the other side thereof is exposed outside the base 230.

By way of example, the electrode pins 250 may be integrally formed with the base 230 through insert injection to the base 230, which is formed by injection molding.

The structure wherein the electrode pins 250 are integrally formed with the base 230 allows not only reduction in the number of components but also removal of a process of assembling the electrode pins 250 to the base 230, thereby reducing labor and costs for manufacture of the UV LED lamp 200.

Each of the electrode pins 250 provided to the base 230 is electrically connected at one side thereof to the substrate 220 via a connection wire 201 or 205. In addition, the other side of the electrode pin 250 exposed to the outside of the base 230 is electrically connected to the socket 350 (see FIG. 2).

According to this embodiment, each of the electrode pins 250 is formed with an insertion hole 251 into which the connection wire 201 or 205 is inserted. Connection between the electrode pins 250 and the connection wires may be achieved as follows.

Specifically, with the connection wire 201 or 205 inserted into the insertion holes 251 to pass through the electrode pins 250, a portion of the connection wire 201 or 205 protruding from the other side of the electrode pins 250 is trimmed and then the connection wire 201 or 205 is soldered to tips of the electrode pins 250 while inwardly compressing each of the electrode pins 250 such that the electrode pins 250 are brought into contact with the connection wire 201 or 205, thereby achieving connection between the electrode pins and the connection wires.

According to this embodiment, each of the bases 230 is provided with the pair of electrode pins 250. In each of the bases 230, the electrode pins 250 are separated a predetermined distance from each other in a perpendicular direction with respect to the longitudinal direction of the substrate 220.

One of the electrode pins 250 is disposed adjacent the surface of the substrate 220 on which the UV LED 210 is placed, and the other electrode p

in 250 is disposed adjacent the back surface of the substrate 220.

The connection wires 201, 205 connect the electrode pins 250 to the substrate 220 and include a first connection wire 201 and a second connection wire 205.

The first connection wire 201 electrically connects one of the electrode pins 250, that is, the electrode pin 250 disposed adjacent the surface of the substrate 220, to the surface of the substrate 220.

The second connection wire 205 electrically connects the other electrode pin 250, that is, the electrode pin 250 disposed adjacent the back surface of the substrate 220, to the back surface of the substrate 220.

That is, connection between one of the electrode pins 250 and the substrate 220 is achieved through the surface of the substrate 220 and connection between the other electrode pin 250 and the substrate 220 is achieved through the back surface of the substrate 220.

Such a connection structure between the electrode pins 250 and the substrate 220 allows connection between the pair of electrode pins 250 and the substrate 220 to be achieved in different accommodation spaces divided by the substrate 220.

That is, the structure wherein the electrode pins 250 are separated from each other in the perpendicular direction with respect to the surface of the substrate 220 allows connection between the pair of electrode pins 250 and the substrate 220 to be achieved in the different accommodation spaces divided by the substrate 220, thereby securing a sufficient space for connection of the connection wires 201, 205 to the substrate 220.

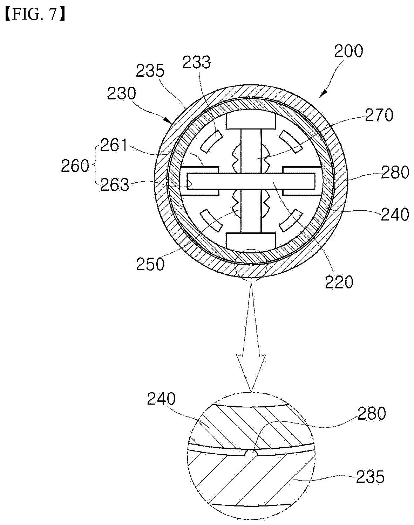

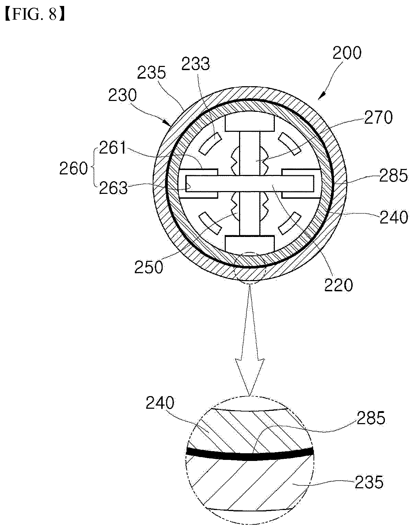

FIG. 7 is a sectional view taken along line "VII-VII" of FIG. 3 and FIG. 8 is a sectional view of another example of coupling between the cover and the base shown in FIG. 7.

Referring to FIG. 7, the base 130 may have pores 233. The pores 233 may be formed to penetrate the electrode pin mounting portion 231 and may be arranged at certain intervals in the electrode pin mounting portion 231.

The pores 233 allow heat generated during UV light emission of the UV LED 210 to be discharged therethrough, thereby preventing excessive increase in temperature of the UV LED lamp 200.

The UV LED lighting apparatus 200 according to this embodiment may further include protrusions 280.

The protrusions 280 are formed on an inner surface of each of the bases 230, specifically on an inner peripheral surface of the cover mounting portion 235.

According to this embodiment, the protrusions 280 are formed between the base 230 and the cover 240 to overlap the cover 240 press-fitted into the base 230.

With this structure, the protrusions 280 compress the cover 240 press-fitted into the base 130 to allow interference fit between the base 230 and the cover 240, thereby improving coupling between the base 230 and the cover 240.

In another example, the UV LED lighting apparatus 200 may include an O-ring member 285, as shown in FIG. 8.

The O-ring member 285 takes the form of a ring of a resilient material and is disposed between the base 230 and the cover 240 coupled to each other.

The O-ring member 285 has a greater thickness than a gap between the base 230 and the cover 240 and is interposed between the base 230 and the cover 240 to allow interference fit between the base 230 and the cover 240, thereby improving coupling force between the base 230 and the cover 240.

Such an O-ring member 285 allows easy replacement when damaged and can effectively seal a junction between the base 230 and the cover 240, thereby improving waterproof and dust-proof performance of the UV LED lamp 200.

Next, operation and effects of the UV LED lamp according to this embodiment will be described with reference to FIG. 3 to FIG. 8.

As shown in FIG. 3 to FIG. 6, the UV LED lamp 200 according to this embodiment can be generally divided into the substrate 220 on which the UV LED 110 is mounted, the bases 230, and the cover 240.

Each of the components constituting the UV LED lamp 200 may be assembled as follows.

The substrate 220 may be provided to the bases 230 to be supported by the bases 230 by press-fitting the substrate 220 into the support guides 260.

Then, the fastening member 270 is coupled to each of the bases 230 so as to penetrate the base 230, whereby the substrate 220 can be more firmly fastened to the bases 230.

Here, movement of the substrate 220 in the vertical direction and the transverse direction is restricted by the support guides 260 coupled to both sides of the substrate 220 and movement of the substrate 220 in the horizontal direction is restricted by the fastening member 270 coupled to the substrate 220 through the substrate 220.

As a result, the substrate 220 can be stably coupled to the base 230 while movement of the substrate 220 is restricted in various directions.

Coupling between each of the bases 230 and the cover 240 can be easily achieved simply by inserting the cover 240 into the cover mounting portion 235.

Here, the protrusions 280 formed on the inner peripheral surface of the cover mounting portion 235 are disposed between the base 230 and the cover 240 to compress the cover 240, or the O-ring member 285 is fitted into the gap between the base 230 and the cover 240, as shown in FIG. 5 and FIG. 6.

Accordingly, since interference fit between the bases 230 and the cover 240 can be achieved to improve fastening force between the bases 230 and the cover 240, coupling between the bases 230 and the cover 240 can be effectively achieved simply by inserting the cover 240 into the cover mounting portion 235.

That is, the substrate 220 and the cover 240 can be stably coupled to the bases 230 and assembly of the UV LED lamp 200 can be completed without additional machining processes, such as a process of punching holes for coupling the fastening member to the cover 240, a process of attaching accessories to the cover 240 to couple the cover 240 to other members, a process of deforming the cover 240 in order to couple the cover 240 to other members, and the like.

According to this embodiment, the cover 240 is formed of a poly(methyl methacrylate) resin or quartz, which exhibit high UV light transmittance.

As a material for the cover 240, although the poly(methyl methacrylate) resin or quartz allows UV light emitted from the UV LED 110 to pass therethrough in a high ratio due to high UV transmittance thereof, the poly(methyl methacrylate) resin or quartz has difficulty in machining, such as bending and punching, and low processability due to characteristics thereof.

In order to solve such problems, the UV LED lighting apparatus 200 according to this embodiment is provided in the form of a finished product through assembly of the substrate 220, the base 230, and the cover 240 so as to make it unnecessary to perform operation of punching, accessory attachment or deformation with respect to the cover 240, and thus can provide improved illumination effects using the cover 240 having high UV transmittance.

Furthermore, the UV LED lamp 200 according to this embodiment can be easily assembled without separate post machining with respect to the cover 240 and separate bonding with respect to each component, thereby reducing work time and costs for manufacture of products through improvement in assembly performance.

While the exemplary embodiment of the present invention has been described, the present invention is not limited thereto.

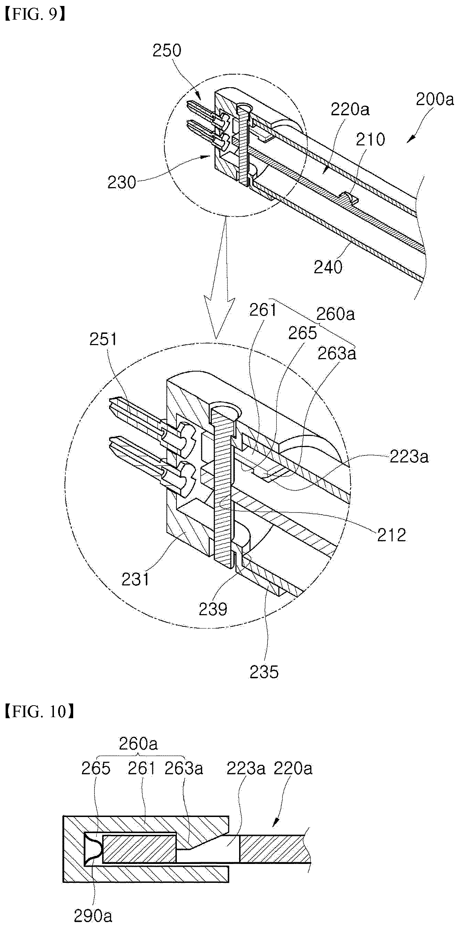

FIG. 9 is a sectional view of a UV LED lamp according to another exemplary embodiment of the present invention and FIG. 10 is a partially enlarged sectional view of the UV LED lamp shown in FIG. 9.

Referring to FIG. 9 and FIG. 10, an insect trap 200a according to this embodiment further includes features for improving fastening force between support guides 260a and a substrate 220a.

According to this embodiment, the substrate 220a is provided with latch grooves 223a at portions thereof inserted into the coupling recesses 263, and each of the support guides 260a is provided with a hook 263a.

The latch grooves 223a are provided to opposite ends of the substrate 220a corresponding to the portions of the substrate inserted into the coupling recesses 263, respectively. Such latch grooves 223a may be formed through the substrate 220a or may be concavely formed thereon.

The hook 263a is formed on the support guide 260a. More specifically, the hook 263a is formed on one end of the rib 261 to protrude from the rib 261 towards the coupling recess 263. In this embodiment, the rib 261 having the hook 263 can be resiliently deformed in the vertical direction.

The hook 263a is fitted into the latch groove 223a to secure the substrate 220a to the support guide 260a when the substrate 220a is completely inserted into the coupling recess 263.

That is, as the hook 263a is fitted into the latch groove 223, interference between the hook 263a and the substrate 220a occurs when external force is applied to the substrate 220a in a direction of releasing the substrate 220a from the support guide 260a, such that the substrate 220a can be firmly secured to the support guide 260a by restricting movement of the substrate 220a in the horizontal direction.

With such coupling between the hook 263a and the latch groove 223a, the substrate 220a can be primarily coupled to the base 130a simply by inserting the substrate 220a into the support guide 260a without fastening the fastening member 270, thereby improving assembly convenience while reducing time for product assembly.

The UV LED lamp 200a according to this embodiment may further include a resilient member 290a.

The resilient member 290a may be a spring, such as a coil spring, a leaf spring, and the like, and is disposed on an inner wall of the support guide 260a, on which the coupling recess 263a is formed, to provide compressive force in the horizontal direction.

Such a resilient member 290a provides compressive force to force the substrate 220a to be brought into close contact with the hook 263a when the hook 263a is fitted into the substrate 220a.

With such operation of the resilient member 290a, the substrate 220a can be more firmly coupled to the support guide 260a instead of dangling inside the support guide 260a.

Although not shown in the drawings, the substrate 220a can be secured by restricting movement of the substrate 220a in the horizontal direction through operation of the hook 263a and the resilient member 290a without the fastening member 270, or by restricting movement of the substrate 220a in the vertical direction through adjustment of the shape and location of the support guide 260a so as to make vertical and transverse gaps of the rib 261 identical to the thickness and width of the substrate 220a.

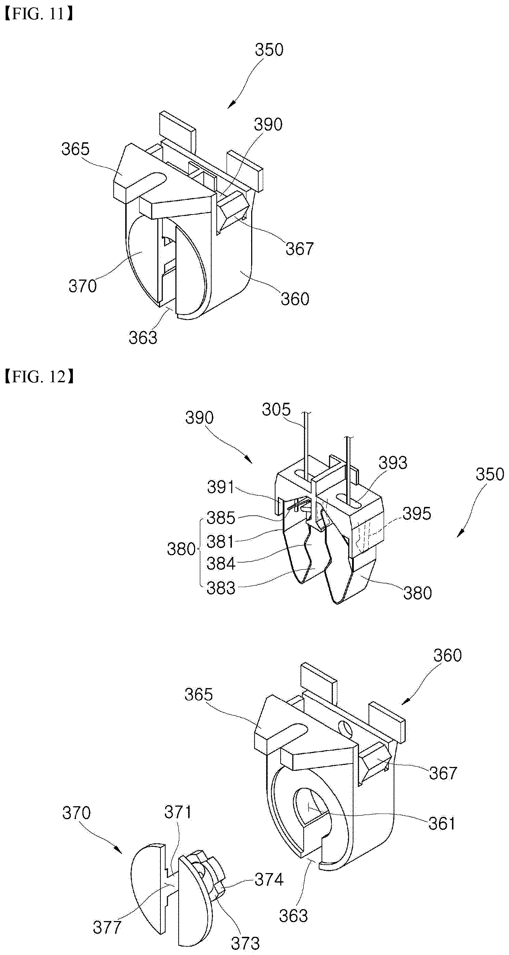

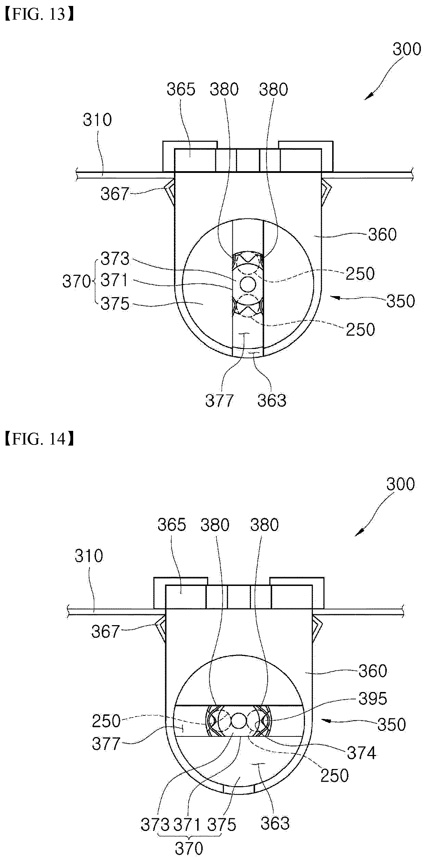

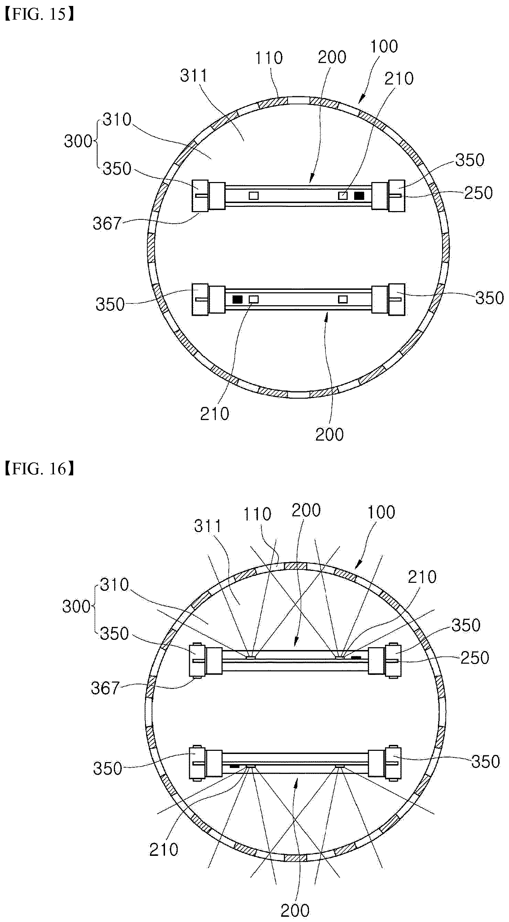

FIG. 11 is a perspective view of the socket shown in FIG. 2 and FIG. 12 is an exploded perspective view of the socket shown in FIG. 11. FIG. 13 is a sectional view of a coupling structure between the socket and the electrode pins in an insertion state and FIG. 14 is a sectional view of a coupling structure between the socket and the electrode pins shifted to a connection state. FIG. 15 is a view of the UV LED lamp inserted into the socket and FIG. 16 is a view of the UV LED lamp secured to the socket.

Referring to FIG. 2, FIG. 11, and FIG. 12, the mounting unit 300 is disposed inside the main body 100 and includes a mounting plate 310 and a socket 350.

The mounting plate 310 is provided in the form of a plate having a circular shape corresponding to the cross-sectional shape of the main body 100. Such a mounting plate 310 is provided with a plurality of sockets 350, for example, a pair of sockets 350 for each UV LED lamp 200.

The socket 350 is coupled to the mounting plate 310 and secures the electrode pins 250 (see FIG. 3) to the mounting plate 310 such that the UV LED lamp 200 is placed inside the main body 100. The socket 350 includes a first socket body 360, an insertion portion 363, a rotary opening/closing member 370, a pair of socket electrodes 380, and a second socket body 390.

The first socket body 360 is detachably coupled to the mounting plate 310. The first socket body 360 has an insertion space formed therein, and a rotary opening/closing member insertion hole 361 is formed through a front surface of the first socket body 360 facing the base 230 (see FIG. 3) to allow the rotary opening/closing member 370 described below to be inserted therethrough.

The insertion portion 363 is formed through the first socket body 360 to form a passage allowing the electrode pins 250 in an insertion state to be inserted into the insertion space.

In this embodiment, the insertion portion 363 is formed through a lower portion of the first socket body 360 to communicate with the insertion space inside the first socket body 360 and the rotary opening/closing member insertion hole 361.

The rotary opening/closing member 370 is rotatably provided to the first socket body 360 and is configured to open/close the insertion portion 363 through change in rotation angle thereof. The rotary opening/closing member370 includes a column 371, a first rotary coupling portion 373, a second rotary coupling portion 375, and an electrode pin insertion hole 377.

The column 371 has a cylindrical shape and has a length extending in the longitudinal direction of the electrode pin 250. In the insertion space, the column 371 can be rotated to an opening position allowing the insertion portion 363 to be open or to a closing position allowing the insertion portion 363 to be closed.

The first rotary coupling portion 373 allows one side of the column 371 to be rotatably coupled to the rear side of the first socket body 360 from the inside of the first socket body 360.

According to this embodiment, the first rotary coupling portion 373 is provided in the form of a disc having a larger diameter than the column 371. The first rotary coupling portion 373 is formed at the center thereof with a fitting hole (reference numeral omitted) and the first socket body 360 is formed on the rear side thereof with a fitting protrusion (reference numeral omitted).

By such interference coupling between the fitting hole and the fitting protrusion, the first rotary coupling portion 373 can rotatably couple one side of the column 371 to the rear side of the first socket body 360.

The second rotary coupling portion 375 allows the other side of the column 371 to be rotatably coupled to the front side of the first socket body 360 from the outside of the first socket body 360. Like the first rotary coupling portion 373, the second rotary coupling portion 375 may be provided in the form of a disc having a larger diameter than the column 371.

The electrode pin insertion hole 377 is formed through the column 371 and the second rotary coupling portion 375 in an insertion direction of the electrode pins 250. The electrode pin insertion hole 377 forms passages inside the rotary opening/closing member 370. Specifically, the electrode pin insertion hole 377 forms a passage connected to the insertion portion 363 when the rotary opening/closing member is in the opening position, as shown in FIG 13, and forms a passage connected to a pair of socket electrodes 380 when the rotary opening/closing member is in the closing position, as shown in FIG 14.

The rotary opening/closing member 370 is provided to the first socket body 360 in such a way that the first rotary coupling portion 373 and the column 371 are inserted into the insertion space inside the first socket body 360 through the rotary opening/closing member insertion hole 361 formed through the front surface of the first socket body 360 and the second rotary coupling portion 375 is brought into close contact with the front surface of the first socket body 360, with the rotary opening/closing member insertion hole 361 covered thereby.

The pair of socket electrodes 380 is disposed in the first socket body 360 and is configured to be brought into contact with the electrode pins 250 shifted to a connection state in the insertion space so as to be electrically connected to the UV LED lamp 200, as shown in FIG. 12 and FIG. 13. Each of the socket electrodes 380 may include a first electrode portion 381, a second electrode portion 383, and a third electrode portion 385.

The first electrode portion 381 is formed of a conductive metal plate and is provided to the second socket body 390 described below. In addition, the first electrode portion 381 vertically extends from an end thereof supported by the second socket body 390.

The second electrode portion 383 extends from the first electrode portion so as to form a V-shape together with the first electrode part 381 and is disposed at a location at which contact with the electrode pin can be achieved, and the third electrode portion 385 protrudes from the second electrode portion 383 toward the first electrode portion 381.

Here, the first electrode portion 381 and the second electrode portion 383 are connected to each other to be resiliently deformable in the direction of changing a gap therebetween, and the second electrode portion 383 and the third electrode portion 385 are connected to each other to be resiliently deformable in the direction of changing a gap between the third electrode portion 385 and the first electrode portion 381.

The second electrode portion 383 is formed with a recessed seat portion 384 which contacts the electrode pin 250 shifted to a connection state.

The pair of socket electrodes 380 is separated a predetermined distance from each other such that the seat portions 384 of the second electrode portions 383 face each other, that is, such that the first electrode portions 381 are located outside and the seat portions 384 of the second electrode portions 383 are located inside.

The socket electrode 380 pushes the electrode pins inward through resilient force acting in the direction of increasing the gap between the first electrode portion 381 and the second electrode portion 383, thereby securing the electrode pins 250 shifted to the connection state.

The second socket body 390 is coupled to the first socket body 360 to secure the socket electrodes 380 in the insertion space. The second socket body 390 is detachably coupled to the first socket body 360, such that the socket electrodes 380 can be easily disassembled from or assembled to the socket 350 by separating the second socket body 390 from the first socket body 360.

According to this embodiment, the second socket body 390 is formed with a recessed electrode mounting portion 391 into which the pair of socket electrodes 380 is detachably fitted.

Each of the pair of socket electrodes 380 is inserted into the electrode mounting portion 391 after being deformed in the direction of decreasing the gap between the first electrode portion 381 and the second electrode portion 383, and is brought into close contact with an inner wall of the electrode mounting portion 391 by resilient force acting in the direction of increasing the gap between the first electrode portion 381 and the second electrode portion 383.

In this way, each of the socket electrodes 380 can be detachably coupled to the second socket body 390 by being inserted into and brought into close contact with the electrode mounting portion 391 by the resilient force thereof.

In addition, the mounting unit 300 according to this embodiment may further include wires 305 connecting the socket electrodes 380 to a power source.

The second socket body 390 is formed therethrough with wire passage holes 393 forming a passage allowing the wires 305 to be inserted into the electrode mounting portion 391 through the second socket body 390.

Each of the wires inserted into the electrode mounting portion 391 through the wire passage hole 393 from the outside of the socket 350 is inserted between the first electrode portion 381 and the third electrode portion 385 and then secured by the third electrode portion 385.

Since the third electrode portion 385 is connected to the second electrode portion 383 to have resilient force in the direction of decreasing the gap between the third electrode portion 385 and the first electrode portion 381, the wire 305 inserted between the first electrode portion 381 and the third electrode portion 385 is pushed toward the first electrode portion 381 by the third electrode portion 385 to be secured between the first electrode portion 381 and the third electrode portion 385.

That is, connection between the wire 305 and the socket electrode 380 can be easily and quickly completed simply by inserting the wire 305 between the first electrode portion 381 and the third electrode portion 385 through the wire passage hole 393 from the outside of the socket 350.

Referring to FIG. 12 and FIG. 14, a plurality of latch grooves 374 is formed on outer peripheral surface of the first rotary coupling portion 373 in a rotational direction of the rotary opening/closing member 370. In addition, the second socket body 390 is provided with a latch hook 395 which has resilient force acting in the direction of being pressed against the first rotary coupling portion 373 to contact the outer peripheral surface of the first rotary coupling portion 373.

According to this embodiment, rotational position of the rotary opening/closing member370 is constrained by engagement between the latch hook 395 and one of the latch grooves 374, and the plurality of latch grooves 374 is formed at a location at which engagement with the latch hook 395 can be achieved when the rotary opening/closing member 370 is in the opening position or in the closing position.

That is, when the rotary opening/closing member 370 reaches the opening position or the closing position during rotation thereof, engagement between the latch groove 374 and the latch hook 395 is achieved, whereby the rotary opening/closing member 370 can be accurately guided to the opening position or the closing position while a user can easily recognize whether the electrode pins 250 are in the insertion state in which the electrode pins 250 can be inserted into or separated from the socket or in the connection state in which the electrode pins are secured to the socket 350.

The socket 350 may be detachably coupled to the mounting plate 310, as shown in FIG. 2.

According to this embodiment, the mounting plate 310 has a mounting hole 315 formed through the front surface 311 and back surface 313 thereof, such that the socket 350 is coupled to the mounting plate 310 through the mounting hole 315 from the back surface 313 of the mounting plate 310.

Referring to FIG. 2 and FIG. 12, the first socket body 360 may further include a back surface support portion 365 and a front surface support portion 367.

The back surface support portion 365 protrudes from the first socket body 360 to be located outside the mounting hole 315 in the width direction and supports the first socket body 360 with respect to the back surface 313 of the mounting plate 310.

The front surface support portion 367 protrudes from the first socket body 360 to be located outside the mounting hole 315 in the width direction such that a fitting space corresponding to the thickness of the mounting plate 310 is formed between the front surface support portion 367 and the back surface support portion 365.

Preferably, the front surface support portion 367 is resiliently deformable in the direction of changing a degree of protrusion thereof in the width direction of the mounting hole 315.

The front surface support portion 367 is deformed in the direction of being narrowed inward in the width direction of the mounting hole 315 when pushed, such that the first socket body 360 can easily pass through the mounting hole 315.

In addition, when the first socket body 360 completely passes through the mounting hole 315, the front surface support portion 367 is resiliently restored in the direction of being widened outward in the width direction of the mounting hole 315, such that the mounting plate 310 is fitted between the back surface support portion 365 and the front surface support portion 367, whereby the socket 350 can be detachably coupled to the mounting plate 310.

The structure wherein the socket 350 is detachably coupled to the mounting plate 310 allows not only easy and quick mounting of the socket 350 but also individual repair and replacement of the socket 350 in case of breakdown or damage, thereby facilitating a maintenance operation while reducing maintenance costs.

Referring to FIG. 1, the trapping unit 400 is provided to the main body 100 to be adjacent to the UV LED lamp 200. The trapping unit 400 may be disposed under the UV LED lamp 200 and includes a suction air stream generation unit 410 and a trapping box 420.

The suction air stream generation unit 410 is disposed under the UV LED lamp 200 and may include a rotary fan generating a suction air stream flowing toward the trapping box 420.

The trapping box 420 is disposed under the suction air stream generation unit 410 and is formed therein with a trapping space for trapping insects drawn into the suction air stream generated by the suction air stream generation unit 410.

The trapping box 420 may be detachably coupled to a lower side of the suction air stream generation unit 410 and is provided on a side wall thereof with a net for observation of trapped insects and discharge of air introduced into the trapping box 420 by the suction air stream.

Next, a process of disposing and securing the UV LED lamp 200 inside the main body 100 will be described.

Referring to FIG. 5 and FIG. 6, the UV LED lamp 200 is provided with the bases 230 at both ends of the substrate 220 in the longitudinal direction of the substrate 220, and each of the bases 230 is provided with the pair of electrode pins 250 separated a predetermined distance from each other in the perpendicular direction with respect to the surface of the substrate 220.

In order to mount the UV LED lamp 200 on the mounting unit 300, first, the electrode pins 250 need to be inserted into the socket 350. Here, the electrode pins 250 are inserted into the socket 350 in the insertion state, that is, in a state in which the pair of electrode pins 250 is arranged parallel to an extension direction of the insertion portion 363.

When the pair of electrode pins 250 is inserted into the socket 350 in the insertion state, the UV LED 210 of the UV LED lamp 200 faces upward or downward.

With the pair of electrode pins 250 inserted into the socket 350, when the UV LED lamp 200 is rotated in one direction or in the opposite direction, as shown in FIG. 14 and FIG. 16, the pair of electrode pins 250 inserted into the socket 350 in the inserted state is shifted to the connection state, that is, a state in which the pair of electrode pins 250 is arranged parallel to an arrangement direction of the socket electrodes 380.

In this embodiment, the connection state refers to a state in which the arrangement of the pair of electrode pins 250 in the insertion state is rotated by 90 degrees in one direction or in the opposite direction.

When the pair of electrode pins 250 is shifted to the connection state, the socket electrodes 380 inwardly push the electrode pins 250 to secure the electrode pins inside the socket 350.

When the electrode pins 250 in the connection state are secured inside the socket 350, the UV LED lamp 200 is placed inside the main body 100 such that the UV LED 210 faces the opening 110, that is, a UV emitting direction of the UV LED lamp 200 is fixed toward the opening 110.

According to this embodiment, insertion of the electrode pins 250 can be achieved without considering the insertion direction of the UV LED lamp 200 into the socket 350.

That is, even when insertion of the electrode pins 250 is achieved regardless of whether the UV LED 210 is inserted into the socket 350 such that the UV LED 210 faces upward or such that the UV LED 210 faces downward, placement of the UV LED lamp 200 can be completed such that the UV LED radiates UV light in a desired direction through adjustment of the rotational direction of the UV LED lamp 200.

In this way, it is not necessary to consider the insertion direction of the UV LED lamp 200 into the socket 350, whereby placement of the UV LED lamp 200 can be achieved in an easy and simple manner.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the scope of the invention as defined by the appended claims.

## Claims

1. An insect trap (500) comprising:
a main body (100) formed with an opening (110) exposing an inside thereof;
an ultraviolet light emitting diode (UV LED) lamp (200) comprising a UV LED (210) configured to emit UV light, a substrate (220) on which the UV LED (210) is disposed, a base (230) having an accommodation space formed inside of the base (230) to receive the substrate (220), and a pair of electrode pins (250)protruding from the base (230) to be electrically connected to the substrate (220), the pair of electrode pins (250) being arranged in a UV emitting direction of the UV LED (210) lamp (200);
a mounting unit (300) comprising a mounting plate (310) placed inside the main body (100) and a socket (350) coupled to the mounting plate (310) and securing the electrode pins (250)to the mounting plate (310) such that the UV LED (210) lamp (200) is placed inside the main body (100); and
a trapping unit (400) provided in the main body (100) and located adjacent to the UV LED lamp (200), **characterized in that**
the pair of electrode pins (250) are secured to the socket (350) in a connection state by a rotation of the UV LED (210) after being inserted into the socket (350) in an insertion state, and
wherein the UV LED (210) lamp (200) having the pair of electrode pins (250) secured to the socket (350) is placed inside the main body (100) such that the UV emitting direction of the UV LED lamp (200) is fixed toward the opening (110),
wherein the socket (350) comprises:
a first socket body (360) coupled to the mounting plate (310) and having an insertion space (363) inside of the first socket body (360);
an insertion portion formed through the first socket body (360) to form a passage allowing the electrode pins (250) in the insertion state to be inserted into the insertion space (363);a pair of socket electrodes (380) contacting the electrode pins (250) in the connection state in the insertion space (363) and electrically connected to the UV LED lamp (200); and
a second socket body (390) coupled) to the first socket body (360) and securing the pair of socket electrodes (380) in the insertion space (363), wherein each of the socket electrodes (380) comprises a first electrode portion (381) provided in the second socket body (390) and a second electrode portion (383) extending from the first electrode portion (381) to form a V-shape together with the first electrode portion (381) and disposed at a location contactable with the electrode pin, and
the first electrode portion (381) and the second electrode portion (383) are connected to each other such that the first electrode portion (381) and the second electrode portion (383) are resiliently deformable in a direction that changes a gap between the first electrode portion (381) and the second electrode portion (383), and
wherein the second socket body (390) includes a recessed electrode mounting portion (391) into which the socket electrode (380) is detachably fitted, and
the socket electrode (380) is inserted into the electrode mounting portion (391) by a deformation in a direction that decreases the gap between the first electrode portion (381) and the second electrode portion (383), and is brought into close contact with an inner wall of the electrode mounting portion (391) by resilient force in the direction that increases the gap between the first electrode portion (381) and the second electrode portion (383).

2. The insect trap (500) according to claim 1, wherein the second electrode portion (383) includes a recessed portion contacting the electrode pin in the connection state, and
the socket (350) electrode operates to provide resilient force to the electrode pin in a direction that increases the gap between the first electrode portion (381) and the second electrode portion (383) to secure the electrode pin in the connection state.

3. The insect trap (500) according to claim 1, further comprising:
a wire connecting the socket (350) to a power source,
wherein the second socket body (390) is formed therethrough with a wire passage hole which forms a passage allowing the wire to be inserted into the electrode mounting portion (391) through the second socket body (390).

4. The insect trap (500) according to claim 3, wherein the socket (350) electrode further comprises a third electrode portion protruding from the second electrode portion (383) towards the first electrode portion (381),
the second electrode portion (383) and the third electrode portion are connected to each other such that the second electrode portion (383) and the third electrode portion are resiliently deformable in the direction that changes the gap between the third electrode portion and the first electrode portion (381), and
the third electrode portion pushes the wire inserted between the first electrode portion (381) and the third electrode portion toward the first electrode portion (381) to secure the wire between the first electrode portion (381) and the third electrode portion.

5. The insect trap (500) according to claim 1, wherein the socket (350) further comprises a rotary opening (110) and closing member rotatably provided in the first socket body (360) to open and close the insertion portion through a change of a rotation angle of the rotary opening (110) and closing member.

6. The insect trap (500) according to claim 5, wherein the rotary opening (110) and closing member comprises:
a column having a length extending in a longitudinal direction of the electrode pin and configured to be rotatable between an opening (110) position allowing the insertion portion to be opened and a closing position allowing the insertion portion to be closed in the insertion space (363);
a first rotary coupling portion rotatably coupling one side of the column to a rear side of the first socket body (360);
a second rotary coupling portion rotatably coupling the other side of the column to a front side of the first socket body (360); and
an insertion hole formed in an insertion direction of the electrode pins (250) through the column and the second rotary coupling portion, the insertion hole providing a passage connected to the insertion portion when the rotary opening (110) and closing member is in the opening (110) position and another passage connected to the socket electrodes (380) when the rotary opening (110) and closing member is in the closing position.

7. The insect trap (500) according to claim 6, wherein a plurality of latch grooves are disposed on an outer peripheral surface of the first rotary coupling portion, the plurality of latch grooves arranged in a rotational direction of the rotary opening (110) and closing member,
the second socket body (390) further includes a latch hook configured to have resilient force in a direction that causes the second socket body (390) to closely attach to the first rotary coupling portion, the latch hook contacting the outer peripheral surface of the first rotary coupling portion, and
the rotary opening (110) and closing member is rotated with constraint by an engagement between the latch hook and one of the latch grooves.

8. The insect trap (500) according to claim 7, wherein the plurality of latch grooves are disposed at a location that is to be engaged with the latch hook when the rotary opening (110) and closing member is in the opening (110) position or in the closing position.

9. The insect trap (500) according to claim 1, wherein the mounting plate (310) has a mounting hole formed through a front surface and a back surface of the mounting plate (310), and
the socket (350) is coupled to the mounting plate (310) through the mounting hole from the back surface of the mounting plate (310).

10. The insect trap (500) according to claim 9, wherein the first socket body (360) comprises:
a back surface support portion protruding from the first socket body (360), the back surface support portion located outside the mounting hole and supporting the first socket body (360) with respect to the back surface of the mounting plate (310); and
a front surface support portion located outside the mounting hole and protruding from the first socket body (360), wherein a fitting space corresponding to a thickness of the mounting plate (310) is formed between the front surface support portion and the back surface support portion.

11. The insect trap (500) according to claim 10, wherein the front surface support portion is resiliently deformable in a direction that changes a degree of protrusion of the front surface support portion in a transverse direction of the mounting hole.

12. The insect trap (500) according to claim 1, wherein the UV LED lamp (200) further comprises:
a first connection wire electrically connecting one of the pair of electrode pins (250)to the surface of the substrate (220) in the accommodation space; and
a second connection wire electrically connecting the other electrode pin to the back surface of the substrate (220) in the accommodation space.

13. The insect trap (500) according to claim 1, wherein the pair of the electrode pins (250) are arranged in the insertion state to be parallel to an extension direction of the insertion portion.

14. The insect trap (500) according to claim 13, wherein the pair of the electrode pins (250)are arranged in the connection state in a direction rotated by 90 degrees as compared to the insertion state.

15. The insect trap (500) according to claim 13, wherein the UV LED (210) faces the opening (110) when the pair of the electrode pins (250) are in the connection state.

## Patentansprüche

1. Insektenfalle (500), umfassend:
einen Hauptkörper (100), der mit einer Öffnung (110) versehen ist, die seinen Innenraum frei legt;
eine Ultraviolett-Leuchtdioden (UV-LED)-Lampe (200), die umfasst: eine UV-LED (210), die dafür eingerichtet ist, UV-Licht auszusenden, ein Substrat (220), auf dem die UV-LED (210) angeordnet ist, eine Basis (230), die einen Aufnahmeraum aufweist, der im Inneren der Basis (230) ausgebildet ist, um das Substrat (220) aufzunehmen, und ein Paar Elektrodenstifte (250), die von der Basis (230) vorstehen, um mit dem Substrat (220) elektrisch verbunden zu werden, wobei das Paar Elektrodenstifte (250) in einer UV-Aussenderichtung der UV-LED (210)-Lampe (200) angeordnet ist;
eine Montageeinheit (300), umfassend eine Montageplatte (310), die im Inneren des Hauptkörpers (100) angeordnet ist, sowie eine Fassung (350), die mit der Montageplatte (310) gekoppelt ist und die Elektrodenstifte (250) an der Montageplatte (310) befestigt, dergestalt, dass die UV-LED (210)-Lampe (200) im Inneren des Hauptkörpers (100) angeordnet ist; und
eine Einfangeinheit (400), die in dem Hauptkörper (100) angeordnet ist und sich neben der UV-LED-Lampe (200) befindet,
**dadurch gekennzeichnet, dass**
das Paar Elektrodenstifte (250) an der Fassung (350) in einem Verbindungszustand durch eine Drehung der UV-LED (210) nach ihrem Einsetzen in die Fassung (350) in einem Einsetzzustand befestigt wird und
wobei die UV-LED (210)-Lampe (200), die das Paar Elektrodenstifte (250) aufweist, die an der Fassung (350) befestigt sind, im Inneren des Hauptkörpers (100) so angeordnet ist, dass die UV-Aussenderichtung der UV-LED-Lampe (200) in Richtung der Öffnung (110) festgelegt ist, wobei die Fassung (350) umfasst:
einen ersten Fassungskörper (360), der mit der Montageplatte (310) gekoppelt ist und einen Einsetzraum (363) innerhalb des ersten Fassungskörpers (360) aufweist;
einen Einsetzabschnitt, der durch den ersten Fassungskörper (360) hindurch ausgebildet ist, um einen Durchgang zu bilden, der es erlaubt, die Elektrodenstifte (250) in dem Einsetzzustand in den Einsetzraum (363) einzusetzen;
ein Paar Fassungselektroden (380), die die Elektrodenstifte (250) in dem Verbindungszustand in dem Einsetzraum (363) kontaktieren und elektrisch mit der UV-LED-Lampe (200) verbunden sind; und
einen zweiten Fassungskörper (390), der mit dem ersten Fassungskörper (360) gekoppelt ist und das Paar Fassungselektroden (380) in dem Einsetzraum (363) befestigt, wobei jede der Fassungselektroden (380) einen ersten Elektrodenabschnitt (381) umfasst, der in dem zweiten Fassungskörper (390) angeordnet ist, und einen zweiten Elektrodenabschnitt (383) umfasst, der sich von dem ersten Elektrodenabschnitt (381) erstreckt, um zusammen mit dem ersten Elektrodenabschnitt (381) eine V-Form zu bilden, und an einer Stelle angeordnet ist, wo er mit dem Elektrodenstift in Kontakt kommen kann, und
wobei der erste Elektrodenabschnitt (381) und der zweite Elektrodenabschnitt (383) so miteinander verbunden sind, dass der erste Elektrodenabschnitt (381) und der zweite Elektrodenabschnitt (383) elastisch in einer Richtung verformbar sind, die einen Spalt zwischen dem ersten Elektrodenabschnitt (381) und dem zweiten Elektrodenabschnitt (383) verändert, und
wobei der zweite Fassungskörper (390) einen ausgesparten Elektrodenmontageabschnitt (391) aufweist, in den die Fassungselektrode (380) herausnehmbar eingesetzt ist und
wobei die Fassungselektrode (380) durch eine Verformung in einer Richtung, die den Spalt zwischen dem ersten Elektrodenabschnitt (381) und dem zweiten Elektrodenabschnitt (383) verkleinert, in den Elektrodenmontageabschnitt (391) eingesetzt ist und durch eine elastische Kraft in der Richtung, die den Spalt zwischen dem ersten Elektrodenabschnitt (381) und dem zweiten Elektrodenabschnitt (383) vergrößert, in unmittelbaren Kontakt mit einer Innenwand des Elektrodenmontageabschnitts (391) gebracht ist.

2. Insektenfalle (500) nach Anspruch 1, wobei der zweite Elektrodenabschnitt (383) einen ausgesparten Abschnitt umfasst, der den Elektrodenstift in dem Verbindungszustand kontaktiert, und
die Fassungs (350)-Elektrode so wirkt, dass sie eine elastische Kraft auf den Elektrodenstift in einer Richtung ausübt, die den Spalt zwischen dem ersten Elektrodenabschnitt (381) und dem zweiten Elektrodenabschnitt (383) vergrößert, um den Elektrodenstift in dem Verbindungszustand zu befestigen.

3. Insektenfalle (500) nach Anspruch 1, des Weiteren umfassend:
einen Draht, der die Fassung (350) mit einer Stromquelle verbindet,
wobei durch den zweiten Fassungskörper (390) hindurch ein Drahtdurchgangsloch ausgebildet ist, das einen Durchgang bildet, der es erlaubt, den Draht durch den zweiten Fassungskörper (390) hindurch in den Elektrodenmontageabschnitt (391) einzuführen.

4. Insektenfalle (500) nach Anspruch 3, wobei die Sockel (350)-Elektrode des Weiteren einen dritten Elektrodenabschnitt umfasst, der von dem zweiten Elektrodenabschnitt (383) in Richtung des ersten Elektrodenabschnitts (381) vorsteht,
wobei der zweite Elektrodenabschnitt (383) und der dritte Elektrodenabschnitt so miteinander verbunden sind, dass der zweite Elektrodenabschnitt (383) und der dritte Elektrodenabschnitt in der Richtung, die den Spalt zwischen dem dritten Elektrodenabschnitt und dem ersten Elektrodenabschnitt (381) verändert, elastisch verformbar sind, und
wobei der dritte Elektrodenabschnitt den zwischen den ersten Elektrodenabschnitt (381) und den dritten Elektrodenabschnitt eingeführten Draht in Richtung des ersten Elektrodenabschnitts (381) drückt, um den Draht zwischen dem ersten Elektrodenabschnitt (381) und dem dritten Elektrodenabschnitt zu befestigen.

5. Insektenfalle (500) nach Anspruch 1, wobei die Fassung (350) des Weiteren ein drehbares Öffnungs- (110) und Schließelement umfasst, das drehbar in dem ersten Fassungskörper (360) angeordnet ist, um den Einsetzabschnitt durch eine Änderung eines Drehwinkels des drehbaren Öffnungs- (110) und Schließelements zu öffnen und zu schließen.

6. Insektenfalle (500) nach Anspruch 5, wobei das drehbare Öffnungs- (110) und Schließelement umfasst:
eine Säule, die eine Länge aufweist, die sich in einer Längsrichtung des Elektrodenstiftes erstreckt, und dafür eingerichtet ist, zwischen einer Öffnungs (110)-Position, die das Öffnen des Einsetzabschnitts erlaubt, und einer Schließposition, die das Schließen des Einsetzabschnitts in dem Einsetzraum (363) erlaubt, gedreht werden zu können; einen ersten Drehkopplungsabschnitt, der eine Seite der Säule drehbar mit einer Rückseite des ersten Sockelkörpers (360) verbindet;
einen zweiten Drehkopplungsabschnitt, der die andere Seite der Säule drehbar mit einer Vorderseite des ersten Sockelkörpers (360) verbindet; und
ein Einsetzloch, das in einer Einsetzrichtung der Elektrodenstifte (250) durch die Säule und den zweiten Drehkopplungsabschnitt hindurch ausgebildet ist, wobei das Einsetzloch einen Durchgang bereitstellt, der mit dem Einsetzabschnitt verbunden ist, wenn sich das drehbare Öffnungs- (110) und Schließelement in der Öffnungs (110)-Position befindet, sowie einen weiteren Durchgang bereitstellt, der mit den Fassungselektroden (380) verbunden ist, wenn sich das drehbare Öffnungs- (110) und Schließelement in der Schließposition befindet.

7. Insektenfalle (500) nach Anspruch 6, wobei mehrere Verriegelungsnuten in einer Außenumfangsfläche des ersten Drehkopplungsabschnitts angeordnet sind, wobei die mehreren Verriegelungsnuten in einer Drehrichtung des drehbare Öffnungs- (110) und Schließelements angeordnet sind,
wobei der zweite Sockelkörper (390) des Weiteren einen Verriegelungshaken umfasst, der dafür eingerichtet ist, eine elastische Kraft in einer Richtung auszuüben, die bewirkt, dass der zweite Sockelkörper (390) unmittelbar an dem ersten Drehkopplungsabschnitt angebracht wird, wobei der Verriegelungshaken die Außenumfangsfläche des ersten Drehkopplungsabschnitts kontaktiert und
wobei das drehbare Öffnungs- (110) und Schließelement durch eine Eingriffnahme zwischen dem Verriegelungshaken und einer der Verriegelungsnuten zwangsweise gedreht wird.

8. Insektenfalle (500) nach Anspruch 7, wobei die mehreren Verriegelungsnuten an einer Stelle angeordnet sind, die mit dem Verriegelungshaken in Eingriff zu bringen ist, wenn sich das drehbare Öffnungs- (110) und Schließelement in der Öffnungs (110)-Position oder in der Schließposition befindet.

9. Insektenfalle (500) nach Anspruch 1, wobei die Montageplatte (310) ein Montageloch aufweist, das durch eine Vorderseite und eine Rückseite der Montageplatte (310) hindurch ausgebildet ist, und
wobei die Fassung (350) durch das Montageloch hindurch von der Rückseite der Montageplatte (310) aus mit der Montageplatte (310) gekoppelt ist.

10. Insektenfalle (500) nach Anspruch 9, wobei der erste Fassungskörper (360) umfasst:
einen von dem ersten Fassungskörper (360) vorstehenden Rückseitenstützabschnitt, wobei der Rückseitenstützabschnitt außerhalb des Montagelochs angeordnet ist und den ersten Fassungskörper (360) in Bezug auf die Rückseite der Montageplatte (310) stützt; und
einen Vorderseitenstützabschnitt, der sich außerhalb des Montagelochs befindet und von dem ersten Fassungskörper (360) vorsteht, wobei ein Montageraum, der einer Dicke der Montageplatte (310) entspricht, zwischen dem Vorderseitenstützabschnitt und dem Rückseitenstützabschnitt gebildet ist.

11. Insektenfalle (500) nach Anspruch 10, wobei der Vorderseitenstützabschnitt in einer Richtung elastisch verformbar ist, die den Grad des Vorsprungs des Vorderseitenstützabschnitts in einer Querrichtung des Montagelochs ändert.

12. Insektenfalle (500) nach Anspruch 1, wobei die UV-LED-Lampe (200) des Weiteren umfasst:
einen ersten Verbindungsdraht, der einen des Paares von Elektrodenstiften (250) mit der Oberfläche des Substrats (220) in dem Aufnahmeraum elektrisch verbindet; und
einen zweiten Verbindungsdraht, der den anderen Elektrodenstift elektrisch mit der Rückseite des Substrats (220) in dem Aufnahmeraum verbindet.

13. Insektenfalle (500) nach Anspruch 1, wobei das Paar Elektrodenstifte (250) in dem Einsetzzustand so angeordnet ist, dass es parallel zu einer Erstreckungsrichtung des Einsetzabschnitts verläuft.

14. Insektenfalle (500) nach Anspruch 13, wobei das Paar der Elektrodenstifte (250) in dem Verbindungszustand in einer Richtung angeordnet ist, die im Vergleich zu dem Einsetzzustand um 90 Grad gedreht ist.

15. Insektenfalle (500) nach Anspruch 13, wobei die UV-LED (210) der Öffnung (110) zugewandt ist, wenn sich das Paar der Elektrodenstifte (250) in dem Verbindungszustand befindet.

## Revendications

1. Piège à insectes (500) comprenant :
un corps principal (100) pourvu d'une ouverture (110) laissant apparaître l'intérieur de celui-ci ;
une lampe (200) à diode électroluminescente ultraviolette (DEL à UV) comprenant une DEL à UV (210) configurée pour émettre une lumière ultraviolette, un substrat (220) sur lequel est disposée la DEL à UV (210), une base (230) à l'intérieur de laquelle est formé un espace de logement destiné à recevoir le substrat (220), et une paire d'électrodes en forme de broches (250) faisant saillie depuis la base (230) pour se connecter électriquement au substrat (220), la paire d'électrodes en forme de broches (250) étant mise en place dans une direction d'émission de lumière UV de la lampe (200) à DEL à UV (210) ;
une unité de montage (300) comprenant une plaque de montage (310) placée à l'intérieur du corps principal (100) et une douille (350) accouplée à la plaque de montage (310) et assujettissant les électrodes en forme de broches (250) à la plaque de montage (310) de manière à placer la lampe (200) à DEL à UV (210) à l'intérieur du corps principal (100) ; et
une unité de piégeage (400) se trouvant dans le corps principal (100) et étant située au voisinage de la lampe à DEL à UV (200), **caractérisé en ce que** :
la paire d'électrodes en forme de broches (250) est assujettie à la douille (350) à l'état de connexion par rotation de la DEL à UV (210) après son introduction dans la douille (350) à l'état d'introduction, et
dans lequel la lampe (200) à DEL à UV (210) dont la paire d'électrodes en forme de broches (250) est assujettie à la douille (350) est placée à l'intérieur du corps principal (100), de manière que la direction d'émission de lumière UV de la lampe à DEL à UV (200) soit fixée en direction de l'ouverture (110),
dans lequel la douille (350) comprend :
un premier corps de douille (360) accouplé à la plaque de montage (310) et présentant un espace d'introduction (363) à l'intérieur du premier corps de douille (360) ;
une partie d'introduction formée à travers le premier corps de douille (360) pour former un passage permettant aux électrodes en forme de broches (250) à l'état d'introduction d'être introduites dans l'espace d'introduction (363) ; une paire d'électrodes de douille (380) entrant en contact avec les électrodes en forme de broches (250) à l'état de connexion dans l'espace d'introduction (363) et étant électriquement connectée à la lampe à DEL à UV (200) ; et
un second corps de douille (390) accouplé au premier corps de douille (360) et assujettissant la paire d'électrodes de douille (380) dans l'espace d'introduction (363), dans lequel chacune des électrodes de douille (380) comprend une première partie d'électrode (381) située dans le second corps de douille (390) et une deuxième partie d'électrode (383) s'étendant depuis la première partie d'électrode (381) pour former un V conjointement avec la première partie d'électrode (381) et étant disposée à un emplacement pouvant entrer en contact avec l'électrode en forme de broche, et
la première partie d'électrode (381) et la deuxième partie d'électrode (383) sont connectées l'une à l'autre de manière que la première partie d'électrode (381) et la deuxième partie d'électrode (383) puissent être déformées élastiquement dans une direction qui modifie un espace entre la première partie d'électrode (381) et la deuxième partie d'électrode (383), et
dans lequel le second corps de douille (390) comporte une partie évidée de montage d'électrode (391) dans laquelle l'électrode de douille (380) est installée de façon amovible, et
l'électrode de douille (380) est introduite dans la partie de montage d'électrode (391) par déformation dans une direction qui réduit l'espace entre la première partie d'électrode (381) et la deuxième partie d'électrode (383), et est amenée au contact étroit d'une paroi intérieure de la partie de montage d'électrode (391) par une force élastique dans la direction qui augmente l'espace entre la première partie d'électrode (381) et la deuxième partie d'électrode (383).

2. Piège à insectes (500) selon la revendication 1, dans lequel la deuxième partie d'électrode (383) comporte une partie évidée entrant en contact avec l'électrode en forme de broche à l'état de connexion, et,
l'électrode de la douille (350) agit pour conférer une force élastique à l'électrode en forme de broche dans une direction qui augmente l'espace entre la première partie d'électrode (381) et la deuxième partie d'électrode (383) afin d'assujettir l'électrode en forme de broche à l'état de connexion.

3. Piège à insectes (500) selon la revendication 1, comprenant en outre :
un fil connectant la douille (350) à une source d'alimentation,
dans lequel à travers le second corps de douille (390) est formé un trou de passage qui forme un passage permettant d'introduire le fil dans la partie de montage d'électrode (391) à travers le second corps de douille (390).

4. Piège à insectes (500) selon la revendication 3, dans lequel l'électrode de la douille (350) comprend en outre une troisième partie d'électrode faisant saillie depuis la deuxième partie d'électrode (383) en direction de la première partie d'électrode (381),
la deuxième partie d'électrode (383) et la troisième partie d'électrode sont connectées l'une à l'autre de manière que la deuxième partie d'électrode (383) et la troisième partie d'électrode puissent être déformées élastiquement dans une direction qui modifie l'espace entre la troisième partie d'électrode et la première partie d'électrode (381), et la troisième partie d'électrode pousse le fil introduit entre la première partie d'électrode (381) et la troisième partie d'électrode vers la première partie d'électrode (381) pour assujettir le fil entre la première partie d'électrode (381) et la troisième partie d'électrode.

5. Piège à insectes (500) selon la revendication 1, dans lequel la douille (350) comprend en outre un élément d'ouverture (110) et de fermeture rotatif, placé rotatif dans le premier corps de douille (360) pour ouvrir et fermer la partie d'introduction moyennant un changement d'angle de rotation de l'élément d'ouverture (110) et de fermeture rotatif.

6. Piège à insectes (500) selon la revendication 5, dans lequel l'élément d'ouverture (110) et de fermeture rotatif comprend :
une colonne présentant une longueur s'étendant dans une direction longitudinale de l'électrode en forme de broche et configurée pour pouvoir tourner entre une position d'ouverture (110) permettant d'ouvrir la partie d'introduction et une position de fermeture permettant de fermer la partie d'introduction dans l'espace d'introduction (363) ;
une première partie d'accouplement rotatif accouplant en rotation un côté de la colonne à un côté arrière du premier corps de douille (360) ;
une seconde partie d'accouplement rotatif accouplant en rotation l'autre côté de la colonne à un côté avant du premier corps de douille (360) ; et
un trou d'introduction formé dans une direction d'introduction des électrodes en forme de broches (250) à travers la colonne et la seconde partie d'accouplement rotatif, le trou d'introduction ménageant un passage relié à la partie d'introduction lorsque l'élément d'ouverture (110) et de fermeture rotatif se trouve dans la position d'ouverture (110) et un autre passage relié aux électrodes de douille (380) lorsque l'élément d'ouverture (110) et de fermeture rotatif se trouve dans la position de fermeture.

7. Piège à insectes (500) selon la revendication 6, dans lequel une pluralité de rainures de verrouillage est disposée sur une surface périphérique extérieure de la première partie d'accouplement rotatif, la pluralité de rainures de verrouillage étant agencée dans un sens de rotation de l'élément d'ouverture (110) et de fermeture rotatif,
le second corps de douille (390) comporte en outre un crochet de verrouillage configuré pour exercer une force élastique dans une direction qui a pour effet d'attacher étroitement le second corps de douille (390) à la première partie d'accouplement rotatif, le crochet rotatif entrant en contact avec la surface périphérique extérieure de la première partie d'accouplement rotatif, et
l'élément d'ouverture (110) et de fermeture rotatif est tourné avec contrainte par une coopération entre le crochet de verrouillage et l'une des rainures de verrouillage.

8. Piège à insectes (500) selon la revendication 7, dans lequel la pluralité de rainures de verrouillage est disposée à un emplacement qui doit coopérer avec le crochet de verrouillage lorsque l'élément d'ouverture (110) et de fermeture rotatif se trouve dans la position d'ouverture (110) ou dans la position de fermeture.

9. Piège à insectes (500) selon la revendication 1, dans lequel la plaque de montage (310) comporte un trou de montage formé à travers une surface avant et une surface arrière de la plaque de montage (310), et
la douille (350) est accouplée à la plaque de montage (310) à travers le trou de montage depuis la surface arrière de la plaque de montage (310).

10. Piège à insectes (500) selon la revendication 9, dans lequel le premier corps de douille (360) comprend :
une partie de support de surface arrière, faisant saillie depuis le premier corps de douille (360), la partie de support de surface arrière étant située à l'extérieur du trou de montage et supportant le premier corps de douille (360) par rapport à la surface arrière de la plaque de montage (310) ; et
une partie de support de surface avant, située à l'extérieur du trou de montage et faisant saillie depuis le premier corps de douille (360), dans lequel un espace d'ajustement correspondant à une épaisseur de la plaque de montage (310) est formé entre la partie de support de surface avant et la partie de support de surface arrière.

11. Piège à insectes (500) selon la revendication 10, dans lequel la partie de support de surface avant est déformable élastiquement dans une direction qui modifie un degré de saillie de la partie de support de surface avant dans une direction transversale du trou de montage.

12. Piège à insectes (500) selon la revendication 1, dans lequel la lampe à DEL à UV (200) comprend en outre :
un premier fil de connexion connectant électriquement une électrode de la paire d'électrodes en forme de broches (250) à la surface du substrat (220) dans l'espace de logement ; et
un second fil de connexion connectant électriquement l'autre électrode en forme de broche à la surface arrière du substrat (220) dans l'espace de logement.

13. Piège à insectes (500) selon la revendication 1, dans lequel la paire d'électrodes en forme de broches (250) est disposée à l'état d'introduction pour être parallèle à une direction d'étendue de la partie d'introduction.

14. Piège à insectes (500) selon la revendication 13, dans lequel la paire d'électrodes en forme de broches (250) est disposée à l'état de connexion dans une direction tournée de 90 degrés par comparaison avec l'état d'introduction.

15. Piège à insectes (500) selon la revendication 13, dans lequel la DEL à UV (210) est en regard de l'ouverture (110), lorsque la paire d'électrodes en forme de broches (250) est à l'état de connexion.
